Europäisches Patentamt

European Patent Office

Office européen des brevets

(19)

(11) Veröffentlichungsnummer: **0 003 331**
**B1**

(12) **EUROPÄISCHE PATENTSCHRIFT**

(45) Veröffentlichungstag der Patentschrift: 07.04.82

(51) Int. Cl.³: **G 03 B 41/18**

(21) Anmeldenummer: **79100155.5**

(22) Anmeldetag: **19.01.79**

(54) **Röntgen-Filmkassette.**

(30) Priorität: **23.01.78 DE 2802730**

(43) Veröffentlichungstag der Anmeldung:
**08.08.79 Patentblatt 79/16**

(45) Bekanntmachung des Hinweises auf die Patenterteilung:
**07.04.82 Patentblatt 82/14**

(84) Benannte Vertragsstaaten:
**BE CH FR GB IT NL SE**

(56) Entgegenhaltungen:
**DE - A - 1 597 410**
**DE - B - 1 112 887**
**US - A - 2 530 321**
**US - A - 2 590 891**
**US - A - 3 704 369**

(73) Patentinhaber: **AGFA-GEVAERT Aktiengesellschaft**
**Camera-Werk**
**Postfach**
**D-8000 München 90 (DE)**

(72) Erfinder: **Bauer, Walter**
**Heinrich-Wieland-Strasse 178**
**D-8000 München 83 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Röntgen-Filmkassette

Die Erfindung betrifft eine Röntgen-Filmkassette mit einem Bodenteil, einem Deckelteil und Verbindungselementen zum Verschließen der beiden Kassettenteile, wobei Bodenteil und Deckelteil aus Kunststoff gebildet sind.

Es sind Rontgen-Filmkassetten aus Metall bekannt, bei welchen zum Andruck der Verstärkerfolien an den Film Schaumstoffeinlagen verwendet werden. Es ist auch bekannt, diesen Andruck mittels Federn zu erzeugen. Bei Großformat-Kassetten dieser Art hat es sich gezeigt, daß sich Boden- und Deckelteil aufgrund der Flächenkräfte dieser elastischen Einlagen ausbeulen. Dies ist insofern unerwünscht, als zum einen die Kassetten nicht mehr flach aufliegen und zum anderen der Andruck zwischen Film und Verstärkerfolie unterschiedlich und damit die Röntgenaufnahme unscharf wird. Eine Verstärkung der Kassettenwände ist aus Gründen der erhöhten Röntgen-Absorption abzulehnen. Aus der DE—B—1 112 887 ist eine Röntgen-Filmkassette aus Metall bekannt, in welche ein magnetischer Gummilappen auf den Film mit den Verstärkerfolien aufgelegt werden kann und der sich an dem kastenförmigen, metallischen Boden magnetisch anzieht, wobei Film und Verstärkerfolien angepreßt werden. In ähnlicher Weise wird in der US—A—3 704 369 eine Filmtüte beschrieben, in welche Verstärkerfolien und Film eingesteckt sind. Die flexiblen Außenwände sind zur Verbesserung der Andruckverhältnisse metallisch und/oder magnetisch ausgebildet. Diese Art von Behältnis ist jedoch aus Gründen der mangelnden Planizität für einen wesentlichen Bereich der Röntgenaufnahme ungeeignet.

Aufgabe der Erfindung ist es daher, eine Röntgen-Filmkassette der eingangs genannten Art zu bilden, welche eine einfache Handhabung, gegebenenfalls auch ein automatisches Beund Entladen zuläßt, wobei ein absolut gleichmäßiger Andruck zwischen Verstärker-' folien und Röntgenfilm gewährleistet sein soll.

Diese Aufgabe wird durch die im Kennzeichen des Anspruchs 1 beschriebene Erfindung gelöst.

Mit der Erfindung wird erreicht, daß zum Zwecke der Filmentnahme bzw. -eingabe lediglich Deckel- und Bodenteil aufgeklappt zu werden braucht, wobei keine Andruck-Einsätze oder dergleichen noch entfernt werden müssen. Damit ist insbesondere die automatische Be- und Entladung der Kassette ermöglicht. Durch die elastische Anbringung von Magnetplatte und/oder Gegenplatte an daren Kassettenteil wird auch bei größeren Fertigungstoleranzen ein gleichmäßiger Andruck gewährleistet.

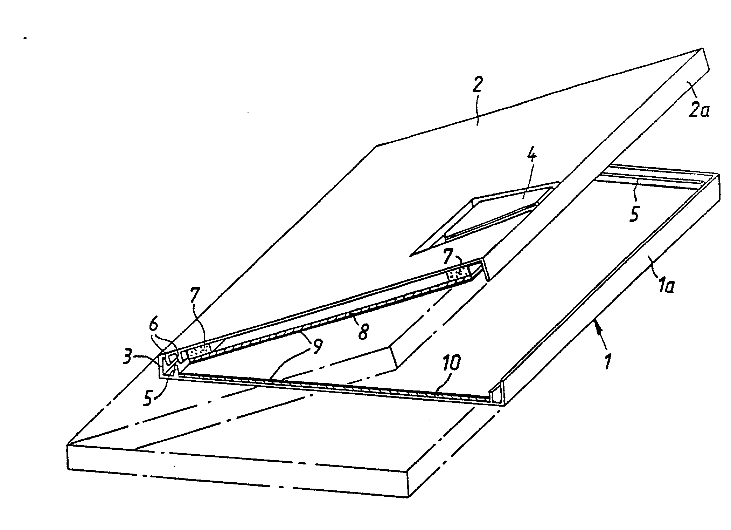

Weitere Einzelheiten und Vorteile der Erfindung ergeben sich aus den Unteransprüchen im Zusammenhang mit der Beschreibung eines Ausführungsbeispieles, das anhand einer Figur eingehend erläutert ist. Die einzige Figur zeigt eine perspektivische Ansicht einer erfindungsgemäßen Röntgen-Filmkassette, zum Teil im Schnitt.

In der Figur ist mit 1 ein Bodenteil und mit 2 ein Deckelteil einer Röntgen-Filmkassette bezeichnet, welche beiden Teile durch ein Kunststoffscharnier miteinander verbunden sind. Am Deckelteil befindet sich ein eingelassener Griff 4, der nicht dargestellte Verreigelungselemente betätigt.

Selbstverständlich kann in einer alternativen Ausführungsform der Erfindung das Scharnier 3 entfallen, d.h., daß Deckelteil mit dem Bodenteil 1 nich in Verbindung stehen. Zu diesem Zwecke wird dann das Deckelteil schachtelartig über das Bodenteil gestülpt und Verriegelungselemente, die zumindest an zwei Seiten angebracht sind, halten die Teile zusammen. Es sind aber auch noch viele andere Verbindungsmöglichkeiten von Deckel- und Bodenteil denkbar.

Am Bodenteil 1 sind nach innen gerichtete Lippen 5 vorgesehen, welche an den Außenrändern verlaufen und ein in der Gröbe der Verstärkerfolien angepaßtes Rechteck bilden. An der Scharnierseite des Deckelteiles 2 sind zwei parallel verlaufende Lippen 6 vorgesehen, welche im geschlossenen Zustand der Kassette beiderseits der Bodenteillippe 5 verlaufen. Im übrigen greifen Seitenstege 2a des Deckelteiles 2 in die durch Lippen 5 und Seitenstege 1a des Bodenteils gebildete Nuten ein und bilden so mit den Lippen 6 eine Lichtverschneidung.

Auf der Innenseite des Deckelteils 2 ist eine Schaumstoffumrandung 7 angebracht, welche eine Magnetplatte 8 trägt.

Die Magnetplatte 8 hat etwa gleiche Abmessungen wie die Verstärkerfolien 9, der nicht dargestellte Röntgenfilm und eine Gegenfolie 10. Die Gegenfolie 10 ist am Bodenteil 1 befestigt, beispeilsweise durch Klebung, und besteht aus einem beliebigen, durch Magnetkraft anziehbaren Werkstoff. Diese Gegenfolie 10 kann beispielsweise eine sehr dünne Stahlfolie mit einer Dicke von 0,05, vorzugsweise 0,02 mm sein, ein Eisenhaftkarton, ein in Plastik gebundenes Ferritpulver oder dergleichen, wenn nur die Röntgenabsorption möglichst gering ist.

Die Magnetplatte 8, die stabil oder flexibel sein kann, besteht beispielsweise aus einer Alnico-Legierung, aus gesinterten Oxyd-Dauermagneten ($Fe$-$Co$-Oxyde, Be-, Sr-Ferrite), aus magnetisch beschichteten PVC-Folien oder aus im Spritzverfahren hergestellten Magneten aus Oxyd-Pulver (kermische Werkstoffe, wie Eisenoxyd und Bariumoxyd) und Bindemittel.

Die Verstärkerfolien sind zur leichteren Handhabung der Kassette zweckmäßigerweise leicht mit der Magnetplatte 8 bzw. der Gegenfolie 10 verbunden, so daß in die geöffnete Röntgenkassette lediglich ein Film eingelegt zu werden braucht. Nach dem Schließen der Kassette befindet sich der Film zwischen den beiden Verstärkerfolien 9, welche wiederum durch die Sandwich-Anordnung von Magnetplatte 8 und Gegen-folie 10 zusammengedrückt werden. Aufgrund des Magnetfeldes zwischen Magnetplatte und Gegenfolie wird ein gleichmäßiger Andruck auf der gesamten Filmfläche erreicht, was ein Hauptkriterium für gute Bildqualität darstellt. Beim Öffnen der Röntgenkassette wird die an der Gegenfolie 10 haftende Magnetplatte 8 mit dem Deckelteil und der oberen Verstärkerfolie 9 abgehoben.

Statt einer Befestigung der Magnetplatte 8 an der Schaumstoffumrandung 7 kann die Magnetplatte 8 auch durch eine dünne Hülle über Schaumstoffleisten an jenem festgehalten werden. Mit einer flexiblen Magnetplatte 8 wird die Gleichmäßigkeit des Andrucks noch optimiert.

## Patentansprüche

1. Röntgen-Filmkassette mite einem Bodenteil, einem Deckelteil und Verbindungselementen zum Verschließen der beiden Kassettenteile, wobei Bodenteil und Deckelteil aus Kunststoff gebildet sind, gekennzeichnet durch eine etwa zur Filmgröße gleich große, mit einem Kassettenteil (1 oder 2) verbundene Magnetplatte (8) und eine mit dem anderen Kassettenteil (1 oder 2) verbundene Gegenplatte (10) aus einem durch das Feld der Magnetplatte anziehbaren Werkstoff, wobei bei geschlossener Kassette Verstärkerfolien (9) und Film zwischen Magnetplatte (8) und Gegenplatte (10) liegen un Magnetplatte (8) und/oder Gegenplatte (10) elastisch an ihrem Kassettenteil (1 bzw. 2) angebracht ist.

2. Röntgen-Filmkassette nach Anspruch 1, dadurch gekennzeichnet, daß Magnetplatte (8) und/oder Gegenplatte (10) über eine Schaumstoffumrandung (7) mit ihrem Kassettenteil (1 bzw. 2) verbunden ist.

3. Röntgen-Filmkassette nach einem der Ansprüche 1 oder 2, dadurch gekennzeichnet, daß die Magnetplatte (8) flexibel ist.

4. Röntgen-Filmkassette nach einem der Ansprüche 1 bis 3, dadurch gekennzeichnet, daß die Gegenplatte (10) eine Folie ist, vorzugsweise mit einer Stärke von 0,01 bis 0,05 mm.

5. Röntgen-Filmkassette nach einem der Ansprüche 1 bis 4, dadurch gekennzeichnet, daß der Werkstoff der Gegenplatte (10) eine Suszeptibilität von gröber eins aufweist.

6. Röntgen-Filmkassette nach Anspruch 5, dadurch gekennzeichnet, daß als Werkstoff für die Gegenplatte (10) eine Stahlfolie, Eisen-haftkarton, in Plastik gebundenes ferromag-netisches Pulver oder eine Magnetfolie verwendet ist.

7. Röntgen-Filmkassette nach einem der Ansprüche 1 bis 6, dadurch gekennzeichnet, daß die Magnetplatte (8) aus einer Alnico-Legierung, aus gesinterten oxidischen Dauer-magneten, aus magnetisch beschichteten PVC-Folien oder aus im Spritzverfahren hergestellten Magneten aus Oxydpulver und Bindemittel hergestellt ist.

## Claims

1. An x-ray-film-cassette comprising a base part, a lid part and connecting elements for locking the two cassette parts, the base part and the lid part being made of plastics material, characterised by a magnetic plate (8) of a size approximately equal to that of the film and connected with one of the cassette parts (1 or 2), and a counterplate (10) connected respectively with the other cassette part (1 or 2) made of a material which is adapted to be attracted by the field of the magnetic plate, the arrangement being such that when the cassette is closed reinforcement foils (9) and the film lie between the magnetic plate (8) and the counterplate (10) and the magnetic plate (8) and/or the counterplate (10) is resiliently attached to its associated cassette part (1 or 2).

2. An X-ray-film-cassette according to Claim 1, characterized in that the magnetic plate (8) and/or counterplate (10) are connected to their respectively associated cassette part (1 or 2) through a foam cushion edging (7).

3. An x-ray-film-cassette according to Claim 1 or 2, characterized in that the magnetic plate (8) is flexible.

4. An x-ray-film-cassette according to any of Claims 1 to 3, characterized in that the counter plate (10) is a foil, preferably having a thickness of between 0.01 and 0.05 mm.

5. An x-ray-film-cassette according to any of Claims 1 to 4, characterized in that the material of the counter plate (10) has a susceptibility of greater than one.

6. An x-ray-film-cassette according to Claim 5, characterized in that a steel foil, an iron-adhering card, a ferromagnetic powder bonded in plastic, or a magnetic foil are used as material for the counterplate (10).

7. An x-ray-film-cassette according to any of Claims 1 to 6, characterized in that the magnetic plate (8) is made of an 'alnico' alloy, a sintered oxidic permanent magnet, a magnetically coated PVC foil or of magnets produced by an injection moulding process from a powdered oxide and a binder.

## Revendications

1. Cassette pour film radiographique, comportant une partie de fond, une partie de couvercle et des éléments de liaison pour fermer les deux parties de cassette, la partie de fond et la partie de couvercle étant réalisées avec une matière synthétique, caractérisée par une plaque magnétique (8) de grandeur sensiblement égale à celle du film et reliée à l'une des parties des cassette (1 ou 2) et par une contreplaque (10) reliée à l'autre partie de cassette (1 ou 2) et faite avec un matériau susceptible d'être attiré par le champ de la plaque magnétique, la réalisation étant telle que lorsque la cassette est fermée des feuilles de renforcement (9) et le film se situent entre la plaque magnétique (8) et la contre-plaque (10), la plaque magnétique (8) et/ou la contre-plaque (10) étant fixées élastiquement sur leur partie de cassette (1 ou 2).

2. Cassette pour film radiographique selon la revendication 1, caractérisée par le fait que la plaque magnétique (8) et/ou la contre-plaque (10) sont reliées, par l'intermédiaire d'une bordure en matière cellulaire (7), avec leur élément de cassette (1 ou 2).

3. Cassette pour film radiographique selon l'une des revendications 1 ou 2, caractérisée par le fait que la plaque magnétique (8) est flexible.

4. Cassette pour film radiographique selon l'une des revendications 1 à 3, caractérisée par le fait que la contre-plaque (10) est une feuille, de préférence d'une épaisseur de 0,01 à 0,05 mm.

5. Cassette pour film radiographique selon l'une des revendications 1 à 4, caractérisée par le fait que le matériau de la contre-plaque (10) présente une susceptibilité supérieure à un.

6. Cassette pour film radiographique selon la revendication 5, caractérisée par le fait que le matériau pour la contre-plaque (10) est une feuille d'acier, un carton à adhérence au fer, une poudre ferro-magnétique liée avec une matière plastique ou une feuille magnétique.

7. Cassette pour film radiographique selon l'une des revendications 1 à 6, caractérisée par le fait que la plaque magnétique (8) est faite avec un alliage Alnico, avec des aimants permanents à base d'oxydes frittés, par des feuilles de PVC à revêtement magnétique ou par des aimants en poudre d'oxydes et liants, fabriqués suivant un procédé par injection.